# FASCICULE DE BREVET EUROPEEN

(11) **EP 2 610 097 B1**
(45) Date de publication et mention de la délivrance du brevet: **24.02.2016**
(21) Numéro de dépôt: 12007529.6
(22) Date de dépôt: 06.11.2012
(51) Int. Cl.: B60J 10/00

(54) **Dispositif de fixation réversible d'un panneau à une structure pour obturer une fenêtre de cette structure, véhicule et procédé**
Wiederabnehmbare Befestigungsvorrichtung eines Paneels auf einer Struktur zum Abdichten eines Fensters dieser Struktur, Fahrzeug und Verfahren
Device for reversibly attaching a panel to a structure in order to seal a window of said structure, vehicle and method

(30) Priorité: 27.12.2011 FR 1104113
(43) Date de publication de la demande: 03.07.2013
(73) Titulaire: Airbus Helicopters, 13725 Marignane Cedex (FR)
(72) Inventeur: Galant, Hervé, F-13220 Chateauneuf Les Martigues (FR)
(74) Mandataire: GPI & Associés

(56) Documents cités:
- EP-A2- 0 367 662
- DE-C1- 3 722 657
- DE-U1- 20 217 925
- FR-A1- 2 766 156
- US-B2- 6 929 844

## Description

La présente invention concerne un dispositif facilitant le montage d'un panneau obturant une fenêtre d'une structure et le démontage d'un tel panneau, un véhicule muni de ce dispositif ainsi que le procédé mis en oeuvre.

Plus particulièrement, l'invention se situe dans le domaine technique restreint du montage/ démontage d'un panneau obturant une ouverture d'une structure d'aéronef.

On appelle donc par la suite « panneau » un organe favorablement transparent obturant une fenêtre d'une structure. A titre d'exemple, ce panneau peut comprendre une vitre en verre ou encore un hublot en plexiglas.

Il est courant de solidariser par collage un panneau transparent à une structure de véhicule et notamment à un aéronef. Ainsi, des hublots en plexiglas ou en verre sont usuellement collés.

Par exemple, un panneau en plexiglas peut être collé directement à une structure d'un fuselage pour obturer une baie. On dispose alors un cordon de colle entre le panneau et la structure pour effectuer le collage.

Pour décoller un panneau en plexiglas brisé, un opérateur insère parfois une scie entre ce panneau et la structure pour couper le cordon de colle.

Cette technique est efficace mais longue et délicate à mettre en oeuvre.

En effet, les cordons de colle utilisés dans le domaine aéronautique présentent une largeur importante de l'ordre de deux à trois centimètres et une faible épaisseur de l'ordre de trois millimètres. Il est alors difficile de positionner et d'utiliser une scie pour décoller le panneau sans endommager la structure et/ou le panneau.

L'opération de décollement peut alors induire une durée d'immobilisation relativement longue et onéreuse.

Par ailleurs, un panneau en verre comporte parfois une vitre en verre fixée à un support, ce support étant collé à un fuselage.

Un opérateur peut alors enlever la vitre du support puis mettre en oeuvre la technique précédemment décrite pour décoller le support du fuselage.

Pour décoller un panneau transparent, on connaît aussi une technique couramment appliquée dans le domaine automobile au pare-brise.

Un opérateur effectue un trou à l'aide d'une perceuse pour traverser de part en part un cordon de colle.

Dès lors, l'opérateur glisse dans le trou réalisé un élément filiforme résistant, dénommé usuellement « corde à piano ». Deux opérateurs se saisissent des extrémités de l'élément filiforme afin de déplacer cet élément filiforme entre le panneau à décoller et la structure pour sectionner le cordon de colle.

Lorsque le panneau est désolidarisé de la structure, un opérateur nettoie ce panneau et la structure pour enlever les résidus de colle. Par conséquent, l'opérateur peut, par exemple, chauffer les surfaces à nettoyer avant d'appliquer un produit de nettoyage de type antioxydant éventuellement.

Cette technique est intéressante. Cependant, elle est difficile voire impossible à mettre en oeuvre sur un aéronef présentant un cordon de colle large, peu épais, et particulièrement résistant à l'état durci. La force à exercer par les opérateurs pour sectionner un tel cordon de colle est en effet trop importante pour l'application de cette technique.

En outre, l'étape de perçage peut être compliquée à réaliser compte tenu de la faible épaisseur du cordon de colle.

Dès lors, le décollement d'un panneau transparent d'aéronef est une opération délicate.

On pourrait envisager de réduire la largeur du cordon de colle pour mettre en oeuvre le procédé appliqué à un pare-brise d'automobile. Cependant, les conditions de pression et d'étanchéité appliquées à un panneau d'aéronef paraissent incompatibles avec une telle réduction de largeur.

L'arrière plan technologique inclut le document US 5069012 relatif au collage d'un panneau sur une structure.

Ce document propose de poser un cordon de colle sur le panneau et d'agencer un joint d'étanchéité entre le panneau et la structure. Le joint est creux, un fil d'extraction étant disposé dans ce joint.

Il paraît délicat d'appliquer cette technique sur un aéronef, la largeur des cordons de colle utilisée dans le domaine aéronautique étant importante.

De même, le document US 6 929 844 propose de disposer un organe en élastomère sur une surface de contact d'un panneau. Cet organe comporte un bourrelet pourvu d'une gorge ouverte sur l'extérieur accueillant un fil d'extraction.

En outre, cet organe comporte une portion plane solidaire du bourrelet et de la surface de contact, la gorge du bourrelet débouchant sur une face libre de cette portion plane.

Dès lors, on dispose un cordon de colle sur la face libre et sur une vitre afin de fixer la vitre à une structure.

En tirant sur le fil d'extraction pour le faire sortir de la gorge, il est possible de sectionner le cordon de colle.

Toutefois, il paraît difficile de sectionner un cordon de colle large.

Le document EP 0 367 662, qui représente l'état de la technique le plus proche, présente un profil calibré intercalé entre un cordon de colle et un panneau. On utilise un fil d'extraction pour trancher le profil calibré.

On connaît aussi les documents DE 37 22 657, FR 2 766 156, DE 202 17 925.

La présente invention a alors pour objet de proposer un dispositif de fixation réversible d'un panneau à une structure pour obturer une ouverture de cette structure. Ce dispositif vise à permettre le démontage rapide d'un panneau collé sur une structure d'aéronef à l'aide d'un cordon de colle large et résistant.

Selon l'invention, un dispositif de fixation réversible d'un panneau à une structure pour obturer une fenêtre de cette structure est notamment remarquable en ce que ce dispositif comporte une pluralité de plots aptes à être noyés dans un cordon de colle, chaque plot comportant deux orifices longitudinaux. Ce dispositif comprend alors deux fils d'extraction traversant chacun un orifice longitudinal de chaque plot.

Dès lors, en tirant sur chaque fil d'extraction, il devient possible de sectionner un cordon de colle ayant une largeur importante.

En effet, chaque fil d'extraction ne doit pas parcourir l'intégralité de la largeur du cordon de colle, mais seulement la distance séparant ce fil d'extraction de l'extérieur du cordon de colle. Par exemple, chaque fil d'extraction peut être amené à sectionner la moitié de la largeur d'un cordon de colle.

Par ailleurs, chaque plot peut faire office de cale et permet de définir précisément l'épaisseur du cordon de colle.

Il est à noter que l'on entend par « épaisseur » d'un cordon de colle, la dimension du cordon de colle séparant le panneau de la structure à laquelle le panneau est collé.

On appelle alors « largeur » du cordon de colle la plus petite distance selon laquelle le cordon de colle s'étend sur le panneau.

Ainsi, un cordon de colle s'étend longitudinalement selon sa plus grande dimension à savoir sa longueur, en élévation selon sa plus petite dimension à savoir son épaisseur, et transversalement selon une dimension intermédiaire à savoir sa largeur.

De plus, on comprend que le dispositif peut être aisément implanté pour le collage d'un panneau sur une structure.

Enfin, ce dispositif peut être appliqué indépendamment de la forme du panneau et de la structure accueillant le panneau.

L'invention peut de plus comporter une ou plusieurs des caractéristiques additionnelles qui suivent.

Par exemple, le dispositif peut posséder un cordon de colle, les plots étant noyés dans ce cordon de colle, chaque fil d'extraction s'étendant d'une première extrémité vers une deuxième extrémité en passant par une portion centrale, chaque portion centrale est noyée dans le cordon de colle.

Dès lors, les plots et la portion centrale des fils d'extraction sont noyés dans le cordon de colle.

Par contre, la première extrémité et la deuxième extrémité de chaque fil d'extraction ne sont pas noyées dans le cordon de colle.

Un opérateur peut donc saisir la première extrémité et la deuxième extrémité de chaque fil d'extraction, manuellement ou à l'aide d'un outil adapté pour sectionner le cordon de colle.

Chaque fil d'extraction s'étendant d'une première extrémité vers une deuxième extrémité en passant par une portion centrale, au moins une extrémité peut comporter un moyen de préhension. Ce moyen de préhension est éventuellement amovible pour permettre l'insertion du fil d'extraction dans les orifices longitudinaux.

En effet, selon une réalisation, on glisse chaque fil d'extraction dans un orifice longitudinal d'un plot.

Selon une autre réalisation, au moins un plot comporte au moins une rainure transversale communiquant avec un orifice longitudinal. Chaque rainure transversale facilite l'insertion et l'extraction d'un fil d'extraction d'un orifice longitudinal dans une direction distincte d'une direction d'extension dudit orifice longitudinal.

La rainure transversale permet donc notamment de glisser un fil d'extraction au travers du plot pour disposer ce fil d'extraction dans l'orifice longitudinal correspondant.

Ainsi, la présence d'un moyen de préhension sur une extrémité d'un fil d'extraction ne complique pas l'agencement de ce fil d'extraction dans un plot.

Selon un autre aspect, le cordon de colle s'étend contre une surface périphérique à coller du panneau d'une part sur une largeur de colle supérieure à deux centimètres et supérieure à une largeur du plot, et d'autre part à partir de la surface supérieure périphérique à coller sur une épaisseur inférieure à cinq millimètres et égale à une épaisseur des plots.

La largeur d'un plot correspond alors à la plus grande dimension du plot. Pour un plot cylindrique à base circulaire, la largeur du plot peut par exemple être le diamètre de ladite base.

La largeur du cordon de colle peut de plus être égale au double de la largeur du plot.

Le plot est favorablement agencé au centre du cordon de colle afin que les fils d'extraction aient à sectionner la même largeur de cordon de colle.

En outre, chaque plot comportant deux orifices longitudinaux incluant un orifice longitudinal intérieur et un orifice longitudinal extérieur, un fil d'extraction traverse tous les orifices longitudinaux intérieurs et l'autre fil d'extraction traverse tous les orifices longitudinaux extérieurs.

Dès lors, un fil d'extraction intérieur d'un dispositif agencé sur un véhicule est disposé entre un fil d'extraction extérieur et l'intérieur du véhicule, alors que le fil d'extraction extérieur est disposé entre le fil d'extraction intérieur et l'extérieur du véhicule.

Ainsi, le dispositif évite toute interférence entre les deux fils d'extraction.

Par ailleurs, au moins un plot comporte au moins une face autoadhésive facilitant son adhésion sur un support.

L'invention a aussi pour objet un véhicule muni d'une structure comportant une paroi périphérique délimitant une fenêtre et un panneau obturant cette fenêtre.

Ce véhicule est alors notamment remarquable en ce qu'il comporte un dispositif de fixation réversible tel que décrit précédemment pour coller le panneau à la paroi périphérique.

Eventuellement, le dispositif est interposé entre une première couche primaire d'accrochage disposée sur la paroi périphérique et une deuxième couche primaire d'accrochage disposée sur une surface périphérique à coller du panneau.

Par ailleurs, selon une variante, chaque fil d'extraction s'étendant d'une première extrémité vers une deuxième extrémité en passant par une portion centrale, les extrémités d'un fil d'extraction sont agencées à l'intérieur du véhicule et les extrémités de l'autre fil d'extraction sont agencées à l'extérieur du véhicule.

Il est possible de prévoir des logements dans le véhicule pour accueillir les extrémités des fils d'extraction.

En outre, l'invention vise un procédé de solidarisation de deux supports comportant respectivement une surface périphérique à coller d'un panneau et une paroi périphérique délimitant une fenêtre d'une structure, ce procédé mettant en oeuvre le dispositif de fixation réversible décrit précédemment. Au cours de ce procédé :
- on fixe chaque plot sur un support,
- on agence deux fils d'extraction, chaque fil d'extraction traversant de part en part un orifice longitudinal de chaque plot,
- on dispose un cordon de colle sur ledit support équipé desdits plots, chaque plot étant noyé dans ledit cordon de colle, une première et une deuxième extrémités de chaque fil d'extraction étant maintenues hors du cordon de colle,
- on dispose le support non équipé desdits plots sur ledit cordon de colle.

Eventuellement, chaque plot est disposé au milieu du cordon de colle.

L'invention et ses avantages apparaîtront avec plus de détails dans le cadre de la description qui suit avec des exemples de réalisation donnés à titre illustratif en référence aux figures annexées qui représentent :
- la figure 1, une vue d'un véhicule de type aéronef,
- la figure 2, un schéma présentant un dispositif de fixation selon l'invention,
- les figures 3 à 7, des vues explicitant le procédé selon l'invention, et
- la figure 8, une coupe présentant un dispositif de fixation.

Les éléments présents dans plusieurs figures distinctes sont affectés d'une seule et même référence.

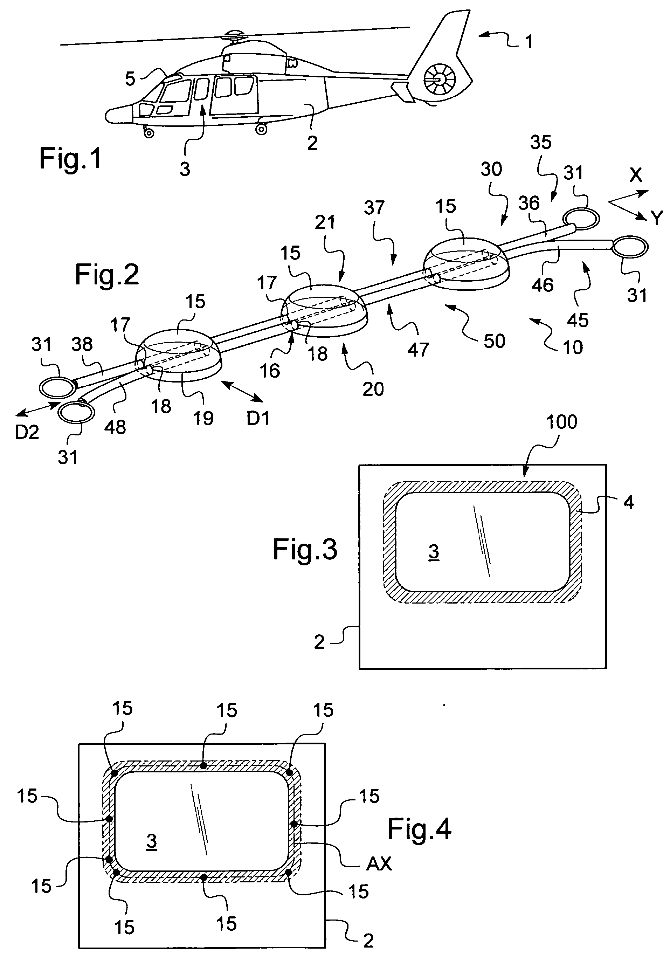

La figure 1 présente un véhicule 1 muni d'une structure porteuse 2. Plus précisément, le véhicule est un aéronef de type giravion, la structure 2 représentant le fuselage de cet aéronef.

Ce véhicule 1 est muni d'une pluralité de fenêtres 3 obturées par un panneau transparent.

Le véhicule 1 est alors pourvu de dispositifs de fixation réversible pour coller certains panneaux 5 à la structure 2.

Dans le cadre d'un aéronef, les cordons de colle utilisés pour fixer un panneau à une structure présentent des dimensions spécifiques, dans la mesure où les contraintes exercées sur les panneaux sont exigeantes comparées aux contraintes observées dans le domaine automobile notamment.

Dans le domaine aéronautique, les cordons de colle sont donc généralement larges et peu épais, alors que les cordons de colles utilisés dans le domaine automobile sont épais et de faibles largeurs.

La figure 2 présente un tel dispositif 10 de fixation.

Ce dispositif 10 comporte une pluralité de plots 15 pouvant coopérer avec un cordon de colle.

Chaque plot 15 est notamment muni d'un corps perforé longitudinalement afin de présenter deux orifices longitudinaux 16.

Ces deux orifices longitudinaux peuvent être superposés, ou agencés l'un à côté de l'autre conformément à la réalisation préférée représentée. En effet, on comprend que la réalisation de la figure 2 est plus adaptée à une application aéronautique requérant une hauteur de plot réduite.

De plus, au moins un plot 15 peut comporter au moins une face autoadhésive 20, 21 pour faciliter sa solidarisation à un panneau ou à une structure.

En outre, le dispositif 10 inclut deux fils d'extraction 30 aptes à sectionner un cordon de colle. Chaque fil d'extraction peut être du type « corde à piano ».

Par conséquent, chaque fil d'extraction 30 traverse un orifice longitudinal 16 de chaque plot 15. Chaque fil d'extraction est alors apte à coulisser dans un orifice longitudinal de chaque plot

Chaque fil d'extraction s'étend ainsi d'une première extrémité 36, 46 vers une deuxième extrémité 38, 48, en passant par une portion centrale 37, 47 qui traverse les plots 15.

Les plots 15 et la portion centrale 37, 47 de chaque fil d'extraction sont alors agencés dans un cordon de colle 50 qui n'est pas visible sur le figure 2.

Par contre, la première extrémité 36, 46 et la deuxième extrémité 38, 48 de chaque fil d'extraction ne sont pas disposées dans le cordon de colle. Un opérateur peut donc s'en saisir manuellement, ou à l'aide d'un outil.

Il est à noter que chaque extrémité 36, 46, 38, 48 peut être munie d'un moyen de préhension 31 pour faciliter sa saisie, tel qu'une boucle selon l'exemple représenté.

Chaque moyen de préhension 31 peut être amovible ou solidaire de l'extrémité associée.

Selon une réalisation, on agence un fil d'extraction dans un orifice longitudinale 16 en insérant et en poussant une extrémité du fil d'extraction 30 dans l'orifice longitudinal concerné.

Le plot est alors réalisé dans une matière pouvant être sectionnée par le fil d'extraction suite à un effort exercé manuellement. Cette matière peut notamment faire partie du groupe des élastomères.

Selon une autre réalisation, un plot peut comporter une rainure transversale 19 par orifice longitudinal. Chaque rainure transversale communique avec l'extérieur du plot 15 pour autoriser l'insertion et l'extraction du fil d'extraction dans l'orifice longitudinal associé, selon une direction dite « direction transversale D1 » par commodité distincte d'une direction d'extension D2 de l'orifice longitudinal 16.

Par ailleurs, les deux orifices longitudinaux peuvent constituer respectivement un orifice longitudinal dénommé « orifice longitudinal intérieur 17 » et un orifice longitudinal dénommé « orifice longitudinal extérieur 18 ». Une fois installé sur un véhicule, l'orifice longitudinal intérieur d'un plot est en regard de l'intérieur de ce véhicule, alors qu'au contraire l'orifice longitudinal extérieur de ce plot est en regard de l'extérieur de ce véhicule.

Dès lors, pour empêcher des interférences entre les fils d'extraction, un fil d'extraction dénommé par commodité « fil d'extraction intérieur 35 » traverse tous les orifices longitudinaux intérieurs 17, alors que l'autre fil d'extraction dénommé par commodité « fil d'extraction extérieur 45 » traverse tous les orifices longitudinaux extérieurs 18.

Les figures 3 à 7 illustrent un procédé mis en oeuvre par ce dispositif 10.

En référence à la figure 3, ce procédé vise à solidariser deux supports l'un à l'autre à l'aide d'un cordon de colle pouvant être sectionné.

Ainsi, le procédé vise à solidariser un support 100 comprenant une paroi périphérique 4 délimitant une fenêtre 3, à un autre support comprenant une surface périphérique à coller d'un panneau. Un tel panneau est éventuellement un panneau transparent à base de verre ou de plexiglas ou équivalent.

En référence à la figure 4, un opérateur répartit des plots 15 sur un support 100, en l'occurrence sur la paroi périphérique 4 selon l'exemple schématisé. L'opérateur optimise la répartition des plots en fonction de la géométrie du support.

Chaque plot 15 peut être centré sur un axe géométriquement médian AX séparant le support en deux parties de largeur égale.

Cette étape est d'autant plus facile à mettre en oeuvre lorsque les plots possèdent une face autoadhésive.

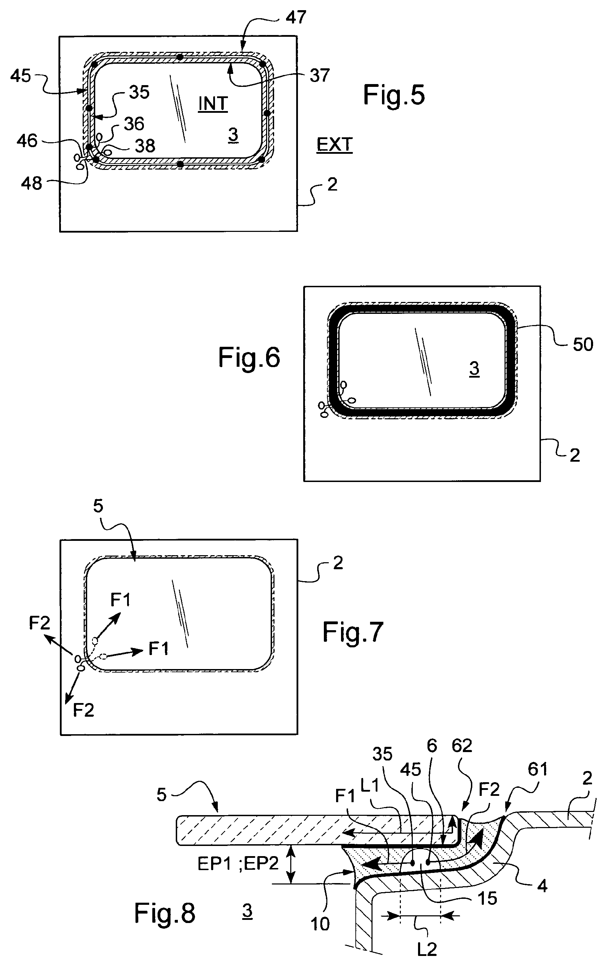

En référence à la figure 5, on met alors en place les fils d'extraction 35, 45 du dispositif 10.

On note que le fil d'extraction intérieur 35 est en regard de l'intérieur INT du véhicule, le fil d'extraction extérieur 45 étant en regard de l'extérieur EXT du véhicule. Les deux fils d'extractions 35, 45 ne se croisent donc pas.

De plus, l'opérateur dispose les extrémités 36, 38, 46, 48 en dehors du support à coller. Ces extrémités peuvent être agencées dans des logements dédiés non représentés.

En référence à la figure 6, l'opérateur applique alors un cordon de colle 50 sur le support équipé des plots 15, les plots 15 et les portions centrales des fils d'extraction étant disposés au sein du cordon de colle, et non pas au sein d'un joint.

En référence à la figure 7 on applique alors le support non équipé des plots sur le cordon de colle et les plots. Selon la variante représentée, on dispose donc le panneau 5 et plus précisément sa surface périphérique à coller sur le cordon de colle.

Il convient ensuite de respecter un temps de séchage usuel.

En référence à la figure 8, le panneau 5 est ainsi collé à la structure 2.

On note qu'il est possible d'appliquer durant le procédé une première couche primaire 61 d'accrochage disposée sur la paroi périphérique 4, et une deuxième couche primaire 62 d'accrochage disposée sur une surface périphérique 6 à coller du panneau 5.

De plus, on remarque que chaque plot est sensiblement disposé au centre du cordon de colle 50.

Dès lors, pour désolidariser le panneau de la structure 2, un opérateur saisit manuellement où à l'aide d'un outil les extrémités d'un fil d'extraction. L'opérateur exerce alors un effort sur ce fil d'extraction. Par exemple, si l'opérateur saisit le fil d'extraction intérieur 35, l'opérateur exerce un effort sur ce fil vers l'intérieur du véhicule selon la flèche F1 en faisant le tour du panneau.

Le fil d'extraction sectionne alors partiellement le cordon de colle.

En exerçant un effort vers l'extérieur du véhicule sur l'autre fil d'extraction, l'opérateur sectionne le cordon de colle selon une nouvelle direction. Par exemple, l'opérateur exerce un effort sur le fil d'extraction extérieur 45 vers l'extérieur du véhicule selon la flèche F2.

Une partie du cordon de colle demeure accrochée à la structure 2 alors que l'autre partie du cordon de colle demeure accrochée au panneau 5.

Eventuellement, une pression manuelle sur le panneau permet de désolidariser complètement le panneau de la structure 2, pour décoller les plots ou une éventuelle portion du cordon de colle comprise entre les deux fils d'extraction.

On comprend que chaque fil d'extraction n'a pas pour fonction de sectionner l'intégralité de la largeur du cordon de colle. Il devient ainsi possible de sectionner aisément des cordons de colle larges, du type utilisé dans le domaine aéronautique notamment.
Par exemple, le cordon de colle 50 s'étend :
- contre une surface périphérique 6 à coller du panneau 5 sur une largeur L1 de colle supérieure à deux centimètres et supérieure à une largeur L2 du plot,
- à partir de la surface supérieure périphérique 6 à coller sur une épaisseur EP1 inférieure à cinq millimètres et égale à une épaisseur EP2 des plots 15.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (10) de fixation réversible d'un panneau (5) à une structure (2) pour obturer une fenêtre (3) de cette structure (2),
**caractérisé en ce que** ce dispositif (10) comporte une pluralité de plots (15) aptes à être noyés dans un cordon de colle (50), chaque plot (15) comportant deux orifices longitudinaux (16), ledit dispositif ayant deux fils d'extraction (30) traversant chacun un orifice longitudinal (16) de chaque plot (15).

2. Dispositif selon la revendication 1,
**caractérisé en ce que** ledit dispositif (10) possède un cordon de colle (50), lesdits plots (15) étant noyés dans ledit cordon de colle (50), chaque fil d'extraction (30) s'étendant d'une première extrémité (36, 46) vers une deuxième extrémité (38, 48) en passant par une portion centrale (37, 47), chaque portion centrale (37, 47) est noyée dans ledit cordon de colle (50).

3. Dispositif selon la revendication 2,
**caractérisé en ce que** ledit cordon de colle (50) s'étend contre une surface périphérique (6) à coller du panneau (5) d'une part sur une largeur (L1) de colle supérieure à deux centimètres et supérieure à une largeur (L2) dudit plot, et d'autre part à partir de ladite surface supérieure périphérique (6) à coller sur une épaisseur (EP1) inférieure à cinq millimètres et égale à une épaisseur (EP2) desdits plots (15).

4. Dispositif selon l'une quelconque des revendications 1 à 3,
**caractérisé en ce que** chaque fil d'extraction (30) s'étendant d'une première extrémité (36, 46) vers une deuxième extrémité (38, 48) en passant par une portion centrale (37, 47), au moins une extrémité (36, 46, 38, 48) comporte un moyen de préhension (31).

5. Dispositif selon l'une quelconque des revendications 1 à 4,
**caractérisé en ce que**, chaque plot (15) comportant deux orifices longitudinaux (16) incluant un orifice longitudinal intérieur (17) et un orifice longitudinal extérieur (18), un fil d'extraction (35) traverse tous les orifices longitudinaux intérieurs (17) et l'autre fil d'extraction (45) traverse tous les orifices longitudinaux extérieurs (18).

6. Dispositif selon l'une quelconque des revendications 1 à 5,
**caractérisé en ce qu'**au moins un plot (15) comporte au moins une face autoadhésive (20, 21).

7. Dispositif selon l'une quelconque des revendications 1 à 6,
**caractérisé en ce qu'**au moins un plot (15) comporte au moins une rainure (19) transversale communiquant avec un orifice longitudinal (16) facilitant l'insertion et l'extraction d'un fil d'extraction (35) dudit orifice longitudinal (16) dans une direction (D1) distincte d'une direction d'extension (D2) dudit orifice longitudinal (16).

8. Véhicule (1) muni d'une structure (2) comportant une paroi périphérique (4) délimitant une fenêtre (3) et un panneau (5) obturant cette fenêtre (3),
**caractérisé en ce que** ledit véhicule (1) comporte un dispositif (10) selon l'une quelconque des revendications 1 à 7 pour coller ledit panneau à ladite paroi périphérique.

9. Véhicule selon la revendication 8,
**caractérisé en ce que** ledit dispositif (10) est interposé entre une première couche primaire (61) d'accrochage disposée sur la paroi périphérique (4) et une deuxième couche primaire (62) d'accrochage disposée sur une surface périphérique (6) à coller du panneau (5).

10. Véhicule selon la revendication 8,
**caractérisé en ce que** chaque fil d'extraction (30) s'étendant d'une première extrémité (36, 46) vers une deuxième extrémité (38, 48) en passant par une portion centrale (37, 47), les extrémités (36, 38) d'un fil d'extraction (30) sont agencées à l'intérieur (INT) du véhicule et les extrémités (46, 48) de l'autre fil d'extraction (40) sont agencées à l'extérieur (EXT) du véhicule (1).

11. Procédé de solidarisation de deux supports (100) comportant une surface périphérique (6) à coller d'un panneau (5) et une paroi périphérique (4) délimitant une fenêtre (3) d'une structure (2), ce procédé mettant en oeuvre le dispositif selon l'une quelconque des revendications 1 à 7, au cours duquel :
- on fixe chaque plot (15) sur un support (100, 4),
- on agence deux fils d'extraction (30), chaque fil d'extraction (30) traversant de part en part un orifice longitudinal (16) de chaque plot (15),
- on dispose un cordon de colle (50) sur ledit support (100, 4) équipé desdits plots (15), chaque plot (15) étant noyé dans ledit cordon de colle (50), une première et une deuxième extrémités (36, 38, 46, 48) de chaque fil d'extraction (30) étant maintenues hors du cordon de colle (50),
- on dispose le support (100, 6) non équipé desdits plots (15) sur ledit cordon de colle (50).

12. Procédé selon la revendication 11,
**caractérisé en ce que** chaque plot (15) est disposé au milieu du cordon de colle (50).

## Patentansprüche

1. Wiederabnehmbare Befestigungsvorrichtung (10) eines Paneels (5) auf einer Struktur (2) zum Abdichten eines Fensters (3) dieser Struktur (2),
**dadurch gekennzeichnet, dass** die Vorrichtung (10) eine Mehrzahl von Klötzen (15) aufweist, die in einer Klebstoffraupe (50) versenkbar sind, wobei jeder Klotz (15) zwei Öffnungen (16) in Längsrichtung aufweist, wobei die Vorrichtung zwei Extraktionsschnüre (30) aufweist, die jeweils eine Öffnung (16) in Längsrichtung eines jeden Klotzes (15) durchqueren.

2. Vorrichtung nach Anspruch 1,
**dadurch gekennzeichnet, dass** die Vorrichtung (10) eine Klebstoffraupe (50) aufweist, wobei die Klötze (15) in der Klebstoffraupe (50) versenkt sind, wobei jede Extraktionsschnur (30) sich von einem ersten Ende (36, 46) zu einem zweiten Ende (38, 48) erstreckt und durch einen mittleren Bereich (37, 47) verläuft, wobei jeder mittlere Bereich (37, 47) in der Klebstoffraupe (50) versenkt ist.

3. Vorrichtung nach Anspruch 2,
**dadurch gekennzeichnet, dass** die Klebstoffraupe (50) sich auf einer zu verklebenden Umfangsfläche (6) des Paneels (5) einerseits mit einer Breite (L1) des Klebstoffs größer als zwei Zentimeter und größer als eine Breite (L2) des Klotzes und andererseits ausgehend von der oberen zu verklebenden Umfangsfläche (6) mit einer Breite (EP1) erstreckt, die kleiner als fünf Millimeter und gleich einer Dicke (EP2) der Klötze (15) ist.

4. Vorrichtung nach einem der Ansprüche 1 bis 3,
**dadurch gekennzeichnet, dass** jede Extraktionsschnur (30) sich von einem ersten Ende (36, 46) zu einem zweiten Ende (38, 48) erstreckt und durch einen mittleren Bereich (37, 47) verläuft, wobei mindestens ein Ende (36, 46, 38, 48) ein Greiforgan (31) aufweist.

5. Vorrichtung nach einem der Ansprüche 1 bis 4,
**dadurch gekennzeichnet, dass** jeder Klotz (15) zwei sich längs erstreckende Öffnungen (16) aufweist, die eine sich längs erstreckende innere Öffnung (17) und eine sich längs erstreckende äußere Öffnung (18) umfassen, wobei eine Extraktionsschnur (35) alle inneren sich längs erstreckenden Öffnungen (17) und die andere Extraktionsschnur (45) alle sich längs erstreckenden äußeren Öffnungen (18) durchquert.

6. Vorrichtung nach einem der Ansprüche 1 bis 5,
**dadurch gekennzeichnet, dass** mindestens ein Klotz (15) mindestens eine selbstklebende Seite (20, 21) aufweist.

7. Vorrichtung nach einem der Ansprüche 1 bis 6,
**dadurch gekennzeichnet, dass** mindestens ein Klotz (15) mindestens eine Quernut (19) aufweist, die mit einer sich längs erstreckenden Öffnung (16) in Verbindung steht, um das Einfügen und das Extrahieren einer Extraktionsschnur (35) aus der sich längs erstreckenden Öffnung (16) in einer Richtung (D1), die verschieden ist von einer Erstreckungsrichtung (D2) der sich längs erstreckenden Öffnung (16), zu erleichtern.

8. Fahrzeug (1) mit einer Struktur (2), die eine Umfangswandung (4) aufweist, die ein Fenster (3) umgrenzt, und mit einem Paneel (5), das dieses Fenster (3) verschließt,
**dadurch gekennzeichnet, dass** das Fahrzeug (1) eine Vorrichtung (10) nach einem der Ansprüche 1 bis 7 aufweist, um das Paneel auf die Umfangswandung zu kleben.

9. Fahrzeug nach Anspruch 8,
**dadurch gekennzeichnet, dass** die Vorrichtung (10) zwischen einer ersten primären Klebeschicht (61), die auf der Umfangswandung (4) angeordnet ist, und einer zweiten primären Klebeschicht (62), die auf einer zu verklebenden Umfangsfläche (6) des Paneels (5) angeordnet ist, geschichtet ist.

10. Fahrzeug nach Anspruch 8,
**dadurch gekennzeichnet, dass** jede Extraktionsschnur (30) sich von einem ersten Ende (36, 46) zu einem zweiten Ende (38, 48) erstreckt und durch einen mittleren Bereich (37, 47) verläuft, wobei die Enden (36, 38) einer Extraktionsschnur (30) im Inneren (INT) des Fahrzeugs, und die Enden (46, 48) der anderen Extraktionsschnur (40) auf der Außenseite (EXT) des Fahrzeugs (1) angeordnet sind.

11. Verfahren zum Befestigen zweier Träger (100) aneinander, die eine Umfangsfläche (6) aufweisen, auf die ein Paneel (5) zu kleben ist, und eine Umfangsfläche (4), die ein Fenster (3) einer Struktur (2) umgrenzt, wobei das Verfahren die Vorrichtung nach einem der Ansprüche 1 bis 7 verwendet, bei dem:
- jeder Klotz (15) auf einem Träger (100, 4) befestigt wird,
- zwei Extraktionsschnüre (30) angeordnet werden, wobei jede Extraktionsschnur (30) eine sich längs erstreckende Öffnung (60) eines jeden Klotzes (15) von einer Seite zur anderen durchquert,
- eine Klebstoffraupe (50) auf dem Träger (100, 4), der mit den Klötzen (15) versehen ist, aufgebracht wird, wobei jeder Klotz (15) in der Klebstoffraupe (50) versenkt ist, wobei ein erstes und ein zweites Ende (36, 38, 46, 48) einer jeden Extraktionsschnur (30) außerhalb der Klebstoffraupe (50) gehalten wird,
- der Träger (100, 6), der nicht mit den Klötzen (15) ausgerüstet ist, auf der Klebstoffraupe (50) angeordnet wird.

12. Verfahren nach Anspruch 11,
**dadurch gekennzeichnet, dass** jeder Klotz (15) in der Mitte der Klebstoffraupe (50) angeordnet ist.

## Claims

1. Device (10) for reversibly fastening a panel (5) to a structure (2) in order to close off a window (3) of said structure (2),
**characterised in that** said device (10) comprises a plurality of studs (15) suitable for being embedded in a strip of adhesive (50), each stud (15) comprising two longitudinal orifices (16), said device having two extraction wires (30), each of which passes through a longitudinal orifice (16) of each stud (15).

2. Device according to claim 1,
**characterised in that** said device (10) has a strip of adhesive (50), said studs (15) being embedded in said strip of adhesive (50), each extraction wire (30) extending from a first end (36, 46) towards a second end (38, 48) while going through a central portion, each central portion (37, 47) is embedded in said strip of adhesive (50).

3. Device according to claim 2,
**characterised in that** said strip of adhesive (50) extends against a peripheral surface (6) to be adhesively bonded of the panel (5), on the one hand over a width (L1) of adhesive greater than two centimetres and greater than a width (L2) of said stud, and on the other hand from said peripheral top surface (6) to be adhesively bonded over a thickness (EP1) less than five millimetres and equal to the thickness (EP2) of said studs (15).

4. Device according to any one of claims 1 to 3,
**characterised in that** each extraction wire (30) extending from a first end (36, 46) towards a second end (38, 48) while going through a central portion (37, 47), at least one end (36, 46, 38, 48) comprises a grasping means (31).

5. Device according to any one of claims 1 to 4,
**characterised in that**, each stud (15) comprising two longitudinal orifices (16) including an inner longitudinal orifice (17) and an outer longitudinal orifice (18), one extraction wire (35) passes through all of the inner longitudinal orifices (17) and the other extraction wire (45) passes through all of the outer longitudinal orifices (18).

6. Device according to any one of claims 1 to 5,
**characterised in that** at least one stud (15) comprises at least one self-adhesive face (20, 21).

7. Device according to any one of claims 1 to 6,
**characterised in that** at least one stud (15) comprises at least one transverse groove (19) communicating with a longitudinal orifice (16) facilitating the insertion and the extraction of an extraction wire (35) from said longitudinal orifice (16) in a direction (D1) distinct from a direction of extension (D2) of said longitudinal orifice (16).

8. Vehicle (1) provided with a structure (2) comprising a peripheral wall (4) defining a window (3) and a panel (5) closing off said window (3),
**characterised in that** said vehicle (4) comprises a device (10) according to any one of claims 1 to 7 for adhesively bonding said panel to said peripheral wall.

9. Vehicle according to claim 8,
**characterised in that** said device (10) is interposed between a first priming coat (61) disposed on the peripheral wall (4) and a second priming coat (62) disposed on a peripheral surface (6) to be adhesively bonded of the panel (5).

10. Vehicle according to claim 8,
**characterised in that** each extraction wire (30) extending from a first end (36, 46) towards a second end (38, 48) while going through a central portion (37, 47), the ends (36, 38) of one extraction wire (30) are arranged inside (INT) the vehicle and the ends (46, 48) of the other extraction wire (40) are arranged outside (EXT) the vehicle (1).

11. Method of securing together two supports (100) comprising a peripheral surface (6) to be adhesively bonded of a panel (5) and a peripheral wall (4) defining a window (3) of a structure (2), said method implementing the device according to any one of claims 1 to 7, during which method:
- each stud (15) is fastened to a support (100, 4),
- two extraction wires (30) are arranged, each extraction wire (30) passing all the way through a longitudinal orifice (16) of each stud (15),
- a strip of adhesive (50) is disposed on said support (100, 4) equipped with said studs (15), each stud (15) being embedded in said strip of adhesive (50), a first and a second end (36, 38, 46, 48) of each extraction wire (30) being kept outside the strip of adhesive (50),
- the support (100, 6) not equipped with said studs (15) is disposed on said strip of adhesive (50).

12. Method according to claim 11,
**characterised in that** each stud (15) is disposed in the middle of the strip of adhesive (50).
